# FASCICULE DE BREVET EUROPEEN

(11) **EP 1 887 857 B1**
(45) Date de publication et mention de la délivrance du brevet: **19.11.2008**
(21) Numéro de dépôt: 06743667.5
(22) Date de dépôt: 10.04.2006
(51) Int. Cl.: A01K 15/02

(54) **DISTRIBUTEUR MOBILE D'ALIMENTS SECS POUR ANIMAUX**
MOBILER TROCKENFUTTERSPENDER FÜR TIERE
MOBILE DRY FEED DISPENSER FOR ANIMALS

(30) Priorité: 19.05.2005 FR 0505065
(43) Date de publication de la demande: 20.02.2008
(73) Titulaire: Lescroart, Pascal, 06270 Villeneuve-Loubet (FR)
(72) Inventeur: Lescroart, Pascal, 06270 Villeneuve-Loubet (FR)
(74) Mandataire: Decobert, Jean-Pascal
(86) Numéro de dépôt international: PCT/FR2006/000787
(87) Numéro de publication internationale: WO 2006/123026

(56) Documents cités:
- DE-U1- 20 002 121
- US-A- 6 073 581
- US-B1- 6 666 167

## Description

La présente invention concerne un dispositif pour distribuer des aliments secs en granulés à des animaux qui font rouler ce dispositif sur le sol.
Les distributeurs existants sont fixes et ne nécessitent pas d'être déplacés pour fournir les aliments aux animaux.

Le dispositif selon l'invention permet d'obliger l'animal à un effort physique pour déplacer ce dispositif et obtenir les aliments secs en granulés, ceci dans les buts suivants : activité ludique, activité physique pour animal trop sédentaire, ralentissement de la vitesse d'ingestion de l'aliment.

Le dispositif selon l'invention permet d'obtenir ces buts. Il comporte en effet selon une première caractéristique une pièce centrale (1)constituée d'un cylindre interne (2) emboîté dans un cylindre externe (3), tous les deux en position horizontale et présentant un nombre différent d'orifices (4)de même dimension en des emplacements précis de leur surface, pouvant être superposés en nombre voulu par rotation manuelle du cylindre externe autour du cylindre interne, la superposition obtenue pouvant être volontairement partielle ou totale (6) pour donner aux filières formées par cette superposition d'orifices une dimension correspondant à celle des aliments secs en granulés placés dans le cylindre, leur permettant de sortir du dispositif au cours des rotations que lui imprime l'animal.

Le dispositif selon l'invention comporte selon une seconde caractéristique une roue (7) à chaque extrémité des cylindres rendues solidaires du cylindre interne

Selon une troisième caractéristique, la fixation des roues est obtenue pour l'une par vissage ou collage (9), pour l'autre par système type double baïonnette (8) permettant sans démonter complètement le dispositif de desserrer le cylindre externe pour le positionner, puis de le serrer entre les parois internes des deux roues dans la position choisie pour les filières(10).

Le dispositif selon l'invention comporte selon une quatrième caractéristique des dents sur une face interne(11) de la roue vissée ou collée, ainsi que sur toute une extrémité du cylindre externe (12) permettant par emboîtement entre ces dents de positionner avec précision le cylindre interne par rapport au cylindre externe avant serrage complet des roues.

Le dispositif selon l'invention comporte selon une quatrième caractéristique un bouchon (13)pouvant être vissé et dévissé sur la face externe (14)d'une ou des deux roues permettant de remplir de granulés à travers cette roue le cylindre interne.

Les dessins annexés illustrent l'invention :

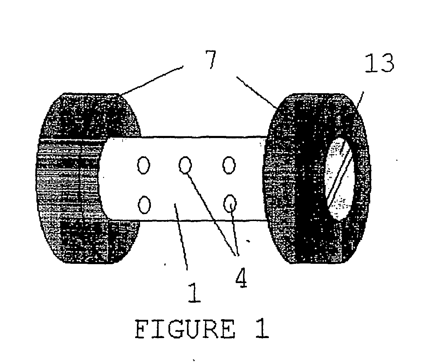

La figure 1 représente l'invention.

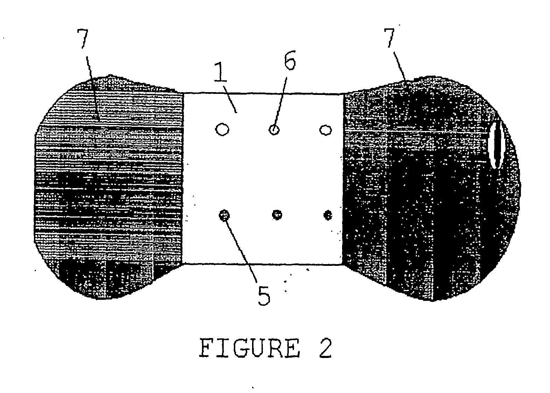

La figure 2 représente à titre d'exemple une application de l'invention destinée plus particulièrement à l'alimentation des chats.

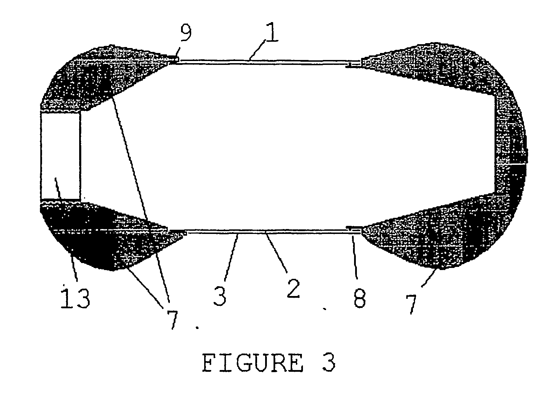

La figure 3 représente une coupe de cette application.

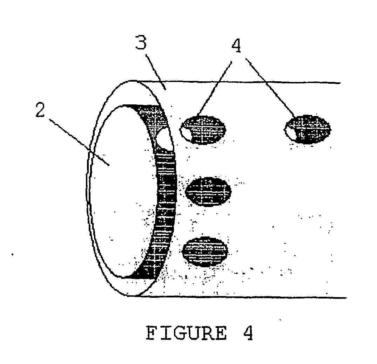

La figure 4 représente une partie des cylindres constituant la pièce centrale.

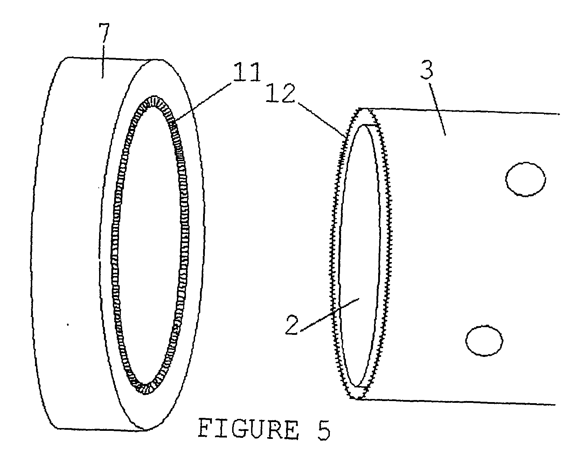

La figure 5 représente la quatrième caractéristique de l'invention.

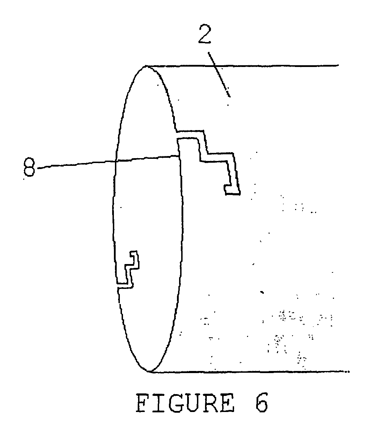

La figure 6 représente un détail du double système baïonnette.

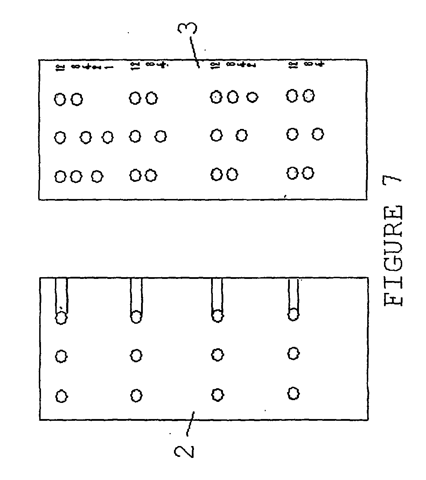

La figure 7 représente le plan des deux cylindres et les orifices tels que définis pour l'application présentée à la figure 2 de l'invention.

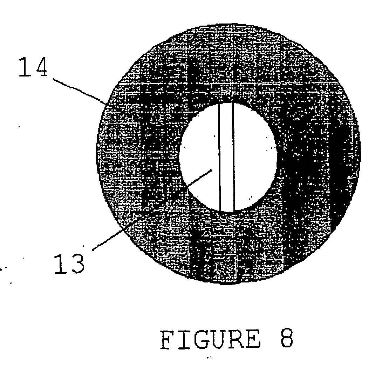

La figure 8 représente la face externe de la roue et le bouchon (13), cinquième caractéristique de l'invention.

A titre de cet exemple non limitatif, l'invention concernant l'alimentation des chats aura des dimensions de l'ordre de 30 cm de longueur, 8 cm de diamètre pour la pièce centrale, 10 cm de diamètre pour les roues.
Dans ce même exemple, où il est principalement constitué de matériaux plastiques, il peut être également utilisé par d'autres petits animaux, comme par exemple les furets, les chiots et les chiens de petite taille...
Dans d'autres applications de plus grande taille destinées à des animaux plus gros, il pourra être réalisé avec l'aide d'autres matériaux plus résistants tels que la tôle de fer ou d'aluminium.

## Revendications

1. Dispositif pour distribuer les aliments secs en granulés ou en croquettes aux animaux qui le font rouler sur le sol, **caractérisé en ce qu'**il comporte une pièce centrale (1) constituée de deux cylindres horizontaux emboîtés l'un dans l'autre, de même longueur, libres l'un par rapport à l'autre, en contact entre eux sur toute leur surface, l'un interne (2) contenant les granulés à distribuer, l'autre externe (3), munis sur leur surface d'orifices (4) en nombre différent, de diamètre identique, placés de manière judicieuse pour être superposés en nombre voulu, grâce à un ajustement obtenu par rotation manuelle du cylindre externe autour du cylindre interne, formant ainsi des filières d'écoulement des granulés depuis l'intérieur du cylindre interne vers l'extérieur de la pièce centrale.

2. Dispositif, selon la revendication 1, **caractérisé en ce qu'**il comporte aux extrémités de la pièce centrale deux roues (7) qui se fixent aux extrémités du cylindre interne en exerçant une pression sur les extrémités du cylindre externe afin de le solidariser au cylindre interne de façon à maintenir les filières telles qu'elles ont été ajustées précédemment.

3. Dispositif selon la revendication 2 **caractérisé en ce que** la fixation des roues sur le cylindre interne se fait pour l'une par système de double baïonnette (8) afin de débrayer le cylindre externe sans désolidariser complètement la roue du cylindre interne lors de l'ajustement des filières, et pour l'autre par vissage ou collage (9).

4. Dispositif selon la revendication 2 et la revendication 3 **caractérisé par** un système en crémaillère sur la face interne (11) de la roue vissée ou collée au cylindre interne, et sur toute une extrémité (12) du cylindre externe (3), permettant de bloquer dans une position précise le cylindre interne par rapport au cylindre externe solidaire de cette roue, ceci afin de faire correspondre un nombre précis d'orifices (4) des deux cylindres en réglant leur superposition pour obtenir des filières plus ou moins ouvertes à la taille des granulés.

5. Dispositif selon la revendication 2 **caractérisé par** l'existence, sur la face externe de la roue vissée ou collée, d'un bouchon (13) pouvant être vissé et dévissé dans la roue, permettant le remplissage du cylindre interne par communication à travers la roue avec l'intérieur du cylindre interne (2).

## Claims

1. A device for dispensing dry food in the form of pellets or cubes to animals which roll it on the ground, **characterised in that** it comprises a central part (1) consisting of two horizontal cylinders nested one inside the other, of the same length, free of each other, in mutual contact throughout their area, an inner cylinder (2) containing the pellets to be distributed, the other outer cylinder (3), both provided on the surface with holes (4) in a different number, and identical diameter, carefully positioned to be superimposed in a desired number thanks to an adjustment obtained by manual rotation of the outer cylinder around the inner cylinder, thereby forming channels enabling the pellets inside the inner cylinder to flow to the outside of the central part.

2. A device according to claim 1 **characterised in that** it comprises at the ends of the central part two wheels (7) which are fixed to the ends of the inner cylinder by exerting pressure on the ends of the outer cylinder in order to secure it to the inner cylinder so as to maintain the channels as previously adjusted.

3. The device according to claim 2, **characterised in that** the wheels are fixed to the inner cylinder, one of the wheels being fixed by a double bayonet system (8) in order to release the outer cylinder without fully separating the wheel from the inner cylinder during adjustment of the channels, and the other wheel being fixed by screwing or gluing (9).

4. The device according to claim 2 and claim 3, **characterised by** a rack system on the inner face (11) of the wheel screwed or glued to the inner cylinder, and on one entire end (12) of the outer cylinder (3), enabling the inner cylinder to be locked in a precise position with respect to the outer cylinder integral with that wheel, in order to match a precise number of holes (4) of the two cylinders by adjusting their alignment to obtain channels that are more or less open to the size of the pellets.

5. The device according to claim 2, **characterised by** the existence, on the outer face of the screwed or glued wheel, of a stopper (13) that can be screwed and unscrewed in the wheel, enabling the inner cylinder to be filled by communication via the wheel with the inside of the inner cylinder (2).

## Patentansprüche

1. Vorrichtung zur Ausgabe von Trockenfutter in Form von Granulat oder Kroketten, die von den Tieren auf dem Boden gerollt wird, **gekennzeichnet dadurch, dass** sie ein Mittelteil (1) bestehend aus zwei ineinander gesteckten, gleich langen Zylindern besitzt, die frei gegeneinander verschiebbar und auf ihrer gesamten Fläche miteinander in Kontakt stehen, einem inneren (2) mit dem zu verteilenden Granulat und einem äußeren (3), und die auf ihrer Oberfläche eine unterschiedliche Anzahl von Öffnungen (4) mit gleichem Durchmesser besitzen, die zweckmäßig in einer Weise angeordnet sind, dass man sie in gewünschter Anzahl übereinander bringen kann, indem der äußere Zylinder mit der Hand um den inneren Zylinder gedreht und **dadurch** die gewünschte Einstellung erzielt wird, so dass Ausgabekanäle für das Granulat entstehen, die aus dem Inneren des inneren Zylinders aus dem Mittelteil hinaus ins Freie führen.

2. Vorrichtung gemäß Anspruch 1, **gekennzeichnet dadurch, dass** sie an den Enden des Mittelteils zwei Räder (7) besitzt, die an den Enden des inneren Zylinders befestigt werden, indem ein Druck auf die Enden des äußeren Zylinders ausgeübt wird, damit dieser mit dem inneren Zylinder fest verbunden wird, so dass **dadurch** die zuvor eingestellten Ausgabekanäle erhalten bleiben.

3. Vorrichtung gemäß Anspruch 2, **gekennzeichnet dadurch, dass** die Befestigung der Räder am inneren Zylinder für eines von ihnen durch ein doppeltes Bajonettsystem (8) erfolgt, damit der äußere Zylinder gelöst werden kann, ohne dass das Rad des inneren Zylinders beim Einstellen der Ausgabekanäle völlig gelöst werden muss, und für das andere durch Schrauben oder Kleben (9) erfolgt.

4. Vorrichtung gemäß Anspruch 2 und 3, **gekennzeichnet durch** ein Zahnstangensystem an der Innenseite (11) des an den inneren Zylinder und an das gesamte Ende (12) des externen Zylinders (3) geschraubten oder geklebten Rades, so dass der innere Zylinder in bezug auf den äußeren Zylinder, der mit diesem Rad fest verbunden ist, in einer bestimmten Position blockiert werden kann, um eine genaue Anzahl von Löchern (4) der beiden Zylinder in Verbindung zu bringen, indem sie derart übereinander positioniert werden, dass Ausgabekanäle entstehen, die angesichts der Größe des Granulats mehr oder weniger offen sind.

5. Vorrichtung gemäß Anspruch 2, **gekennzeichnet dadurch, dass** auf der äußeren Seite des geschraubten oder geklebten Rades ein Stopfen (13) vorhanden ist, der in das Rad hinein- und herausgeschraubt werden kann und das Befüllen des inneren Zylinders durch eine das Rad durchquerende Verbindung zum Innenraum des inneren Zylinders (2) erlaubt.
